# EUROPÄISCHE PATENTSCHRIFT

(11) **EP 0 759 547 B1**
(45) Veröffentlichungstag und Bekanntmachung des Hinweises auf die Patenterteilung: **19.09.2001**
(21) Anmeldenummer: 96810394.5
(22) Anmeldetag: 14.06.1996
(51) Int. Cl.: G01L 19/14, G01L 9/12

(54) **Drucksensor**
Pressure sensor
Capteur de pression

(30) Priorität: 19.08.1995 EP 95113064
(43) Veröffentlichungstag der Anmeldung: 26.02.1997
(73) Patentinhaber: Endress + Hauser GmbH + Co., 79689 Maulburg (DE)
(72) Erfinder: Schmidt, Elke, Dipl.Phys., 79650 Schopfheim (DE); Drewes, Ulfert, Dipl.Phys., 79423 Heitersheim (DE); Hegner, Frank, Dr., 79540 Lörrach (DE); Martin, Rainer, Dipl.Ing., 79588 Efringen-Kirchen (DE)
(74) Vertreter: Morstadt, Volker, Dipl.-Ing.

(56) Entgegenhaltungen:
- DE-A- 2 015 962
- DE-A- 4 234 290
- GB-A- 2 012 052
- US-A- 4 898 035
- US-A- 5 317 921

## Beschreibung

Es wird die Priorität der europäischen Patent-Anmeldung 95 11 3064.0 vom 19. August 1995 beansprucht.

Die Erfindung betrifft einen Drucksensor. Drucksensoren werden in einer Vielzahl von Industriezweigen eingesetzt. Je nach Verwendung muß ein Drucksensor einer Vielzahl von Anforderungen genügen. Generell werden Drucksensoren, die einen geringen Meßfehler aufweisen und mechanisch robust sind, bevorzugt.

In der US-A 52 12 989 ist ein Drucksensor beschrieben
- mit einem Sensorelement,
- mit einem eine zentrale axiale durchgehende Bohrung aufweisenden Gehäuse zur Aufnahme des Sensorelements,
- mit einer ein erstes Ende der Bohrung und damit das Gehäuse nach außen hin abschließenden, gewellten Membran,
- mit einer innerhalb des Gehäuses angeordneten, ein zweites Ende der Bohrung verschließenden Tragplatte,
- mit einem von der Tragplatte, dem Gehäuse und der Membran umschlossenen Innenraum,
   -- wobei das Sensorelement im Innenraum auf der Tragplatte angeordnet ist, und
- mit einer den abgeschlossenen Innenraum vollständig ausfüllenden Flüssigkeit.

Bei dieser Anordnung ist also ein flüssigkeitsgefüllter Druckmittler vorgesehen, bei dem ein auf die Membran einwirkender Druck durch die Flüssigkeit auf das von der Membran entfernt angeordnete Sensorelement übertragen wird.

Nachteil eines solchen Drucksensors ist, daß eine temperaturbedingte Volumenänderung der Flüssigkeit zu Meßfehlern führt. Diese sind insb. bei kleinen zu messenden Drücken, z.B. von 0 Pa bis 50 kPa, erheblich, so daß hier eine ausreichende Meßgenauigkeit, z.B. ein Fehler von weniger als einem Prozent des Meßbereichs, nicht oder nur durch sehr aufwendige Fehlerkorrekturen gewährleistet werden kann.

Weiterhin ist die Membran üblicherweise sehr dünn und daher empfindlich. Da eine Seite der Membran vom Medium, dessen Druck zu messen ist, also vom sogenannten Meßmedium, beaufschlagt ist, und da Meßmedien oft abrasiv sind, können leicht plastische Verformungen der Membran und damit Meßfehler entstehen. Bei einer Zerstörung der Membran läuft die Flüsigkeit aus. Der Einsatz einer robusteren Membran ist in der Regel nicht möglich, da daraus eine Einschränkung des Meßbereichs des Drucksensors resultiert.

Aufgrund der Empfindlichkeit der Membran ist es bei solchen Drucksensoren auch meist erforderlich, die Membran gegen zu große Durchbiegung zu schützen, also einen Überlastschutz, vorzusehen, z.B. ein entsprechend der Membranform gestaltetes Membranbett, das die Durchbiegung der Membran begrenzt.

In der DE-A 42 34 290 ist ein Drucksensor beschrieben
- mit einem Sensorelement in Form einer kapazitiven Druckmeßzelle aus einer Keramik,
   -- wobei die Druckmeßzelle eine Sensormembran und einen Grundkörper aufweist, die vergleichbare mechanische Eigenschaften, insb. eine vergleichbare Steifigkeit und/oder eine vergleichbare Dicke, aufweisen,
- mit einem rotationssymmetrischen, eine axiale Bohrung aufweisenden Gehäuse,
   -- deren Durchmesser in Richtung einer einem Meßmedium zugewandten Frontseite abnimmt, und
- mit einem einzigen, zwischen dem Gehäuse und einer Mantelfläche des Drucksensors frontbündig eingesetzten Dichtelement, durch das das Sensorelement frontbündig im Gehäuse gehaltert ist.

In der GB-A 20 12 052, insb. Fig. 5, ist ferner eine ähnlich aufgebaute Sonde zur Messung des Druckes eines Meßmediums beschrieben
- mit einem piezoelektrischen, aus einem Turmalin-Kristall bestehenden Sensorelement,
- mit einem rotationssymmetrischen, mit einem eine zentrale axiale durchgehende Bohrung aufweisenden Gehäuse zur Aufnahme des Sensorelements,
- mit einer ein erstes Ende der Bohrung und damit das Gehäuse nach außen hin abschließenden, dünnen Metallfolie als Membran,
   -- auf deren Innenseite das Sensorelement unter Einhaltung eines seitlichen, ringförmigen Abstandes zum Gehäuse befestigt ist,
- mit einer innerhalb des Gehäuses angeordneten, die Bohrung verschließenden Platte,
- mit einem von der Platte, dem Gehäuse und der Membran umschlossenen Innenraum und
- mit einer den umschlossenen Innenraum vollständig ausfüllenden Flüssigkeit.

Schließlich ist in der US-A 48 98 035 ein Drucksensor zur Messung des Druckes eines Meßmediums beschrieben
- mit einem Sensorelement in Form einer resistiven Druckmeßzelle aus einer Keramik, insb. aus Aluminiumoxid-Keramik,
   -- wobei die Druckmeßzelle einstückig ausgebildet ist und aus einer zentralen Sensormembran und einem äußeren ringförmigen Grundkörper besteht,
- mit einem einen Innenraum aufweisenden, insb. topfartigen, Gehäuse zur Aufnahme des Sensorelements,
- mit einem eine Teilinnenfläche des Gehäuses mit der gesamten Randfläche des Grundkörpers verbindenden Verbindungselement,
   -- wobei dieses und das Sensorelement den Innenraum zum Meßmedium hin abschließen.

Ein jeweiliger Nachteil dieser letzten drei vorbeschriebenen Drucksensoren besteht darin, daß das Sensorelement fest in das Gehäuse eingespannt ist. An der Einspannstelle treten somit durch einen auf das Sensorelement bzw. die Membran allfällig einwirkenden Druck hohe Kräfte auf, die zu einer Verspannung zwischen dem Sensorelement und dem Gehäuse und zu einer Durch- und/oder Verbiegung des Sensorelements führen können. Dadurch verschlechtert sich die Hysterese und das Temperaturverhalten des Meßwerts des Gesamtsystems.

Eine Aufgabe der Erfindung besteht daher darin, einen frontbündigen und korrosionsbeständigen Drucksensor anzugeben, der einerseits mechanisch sehr robust ist, bei dem andererseits das Gehäuse vom Sensorelement mechanisch möglichst weitgehend entkoppelt ist und dessen Meßwerte eine geringe Temperaturabhängigkeit sowie eine geringe Hysterese aufweisen.

Die Lösung dieser Aufgabe ist im Anspruch 1 angegeben. Vorteilhafte Ausgestaltungen und Weiterbildungen sind in den abhängigen Ansprüchen enthalten.

Ein Vorteil der Erfindung besteht darin, daß das Sensorelement bis auf die dem Meßmedium ausgesetzte Fläche von der Flüssigkeit umgeben ist. In dieser herrscht ein einem auf den Drucksensor einwirkenden Druck entsprechender isostatischer Gegendruck, durch den das Sensorelement in seiner Lage gehalten ist. Der Drucksensor ist dadurch sehr robust, und auch bei extremen Druckbelastungen, z.B. von 10⁸ Pa (= 1000 bar), ist kein Überlastschutz erforderlich.

Die Meßwerte von Drucksensoren nach der Erfindung weisen eine geringe Hysterese auf, da die zwischen dem Verbindungselement und dem Sensorelement und zwischen dem Verbindungselement und dem Gehäuse bestehenden mechanischen Verbindungen durch den auf den Drucksensor einwirkenden Druck nicht belastet sind.

Ferner weisen die Meßwerte von Drucksensoren nach der Erfindung eine geringe Temperaturabhängigkeit auf, da die temperatur-bedingten Belastungsänderungen in der Flüssigkeit nicht auf das Sensorelement einwirken und temperaturbedingte Belastungsänderungen im Verbindungselement von diesem abgefangen werden.

Ferner tritt eine ungleichmäßige Belastung des Sensorelements nicht auf, da auf das Sensorelement von allen Seiten der gleiche Druck einwirkt. Ein weiterer Vorteil besteht darin, daß der Drucksensor einfach aufgebaut ist und eine geringe Anzahl von Bauteilen aufweist.

Die Erfindung und weitere Vorteile werden nun anhand von Ausführungsbeispielen, die in den Figuren der Zeichnung dargestellt sind, näher erläutert; gleiche Teile sind in den Figuren mit denselben Bezugszeichen versehen.
- Fig. 1: zeigt schematisch einen Längsschnitt einer ersten Ausführungsform eines Drucksensors,
- Fig. 2: zeigt schematisch einen Längsschnitt einer Weiterbildung des Drucksensors nach Fig. 1, und
- Fig. 3: zeigt schematisch einen Längsschnitt einer zweiten Ausführungsform des Drucksensors nach Fig. 1.

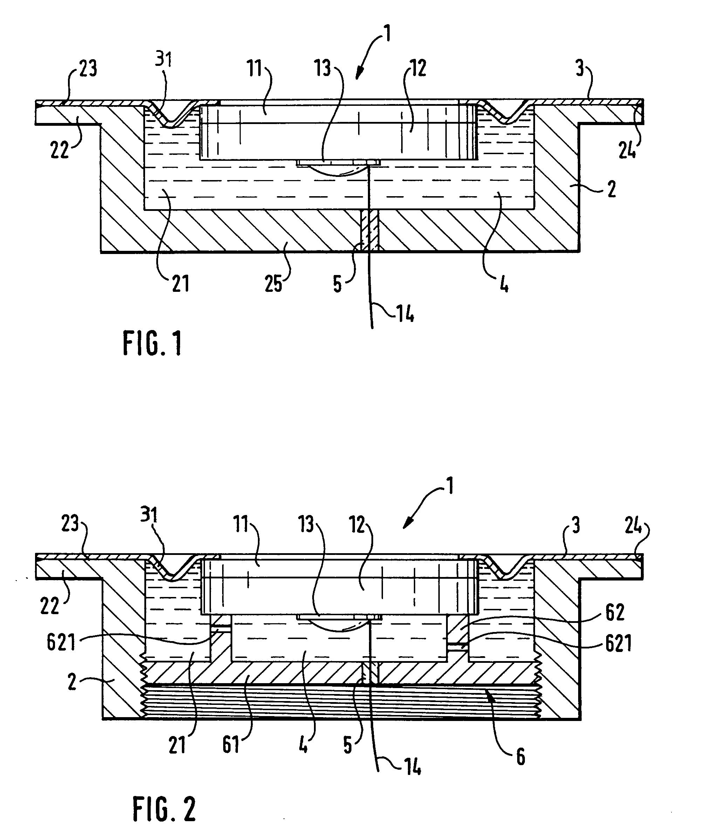

In den Fig. 1 bis 3 ist als Kernstück des jeweils schematisch im Längsschnitt dargestellten Drucksensors ein Sensorelement 1 gezeigt. Dies ist eine keramische kapazitive, zylindrische Druckmeßzelle, die eine Sensormembran 11 und einen Grundkörper 12 umfaßt. Diese beiden Teile sind mittels eines Verbindungsmaterials, z.B. mittels eines Aktiv-Hartlots, in einem definierten Abstand voneinander unter Bildung einer inneren Kammer gehalten und zugleich miteinander hermetisch dicht verbunden.

Da die jeweilige Innenfläche der Sensormembran 11 und des Grundkörper 12 mit einem Elektrodenmaterial beschichtet sind, bilden diese mindestens einen Meßkondensator, dessen Kapazität von der Durchbiegung der Sensormembran 11 abhängt und somit ein Maß für den darauf einwirkenden Druck ist.

Die Sensormembran 11 kann aus Keramik, Oxidkeramik, insb. Aluminiumoxid, Quarz, Saphir oder einem kristallinen Material bestehen. Der Grundkörper 12 besteht vorzugsweise aus einem Material, das zum Material der Sensormembran 11 sehr ähnlich ist oder das zumindest einen vergleichbaren thermischen Ausdehnungskoeffizienten wie diese aufweist.

Auf der kammer-abgewandten Außenseite des Grundkörpers 12 weist das Sensorelement 1 eine elektronische Schaltung 13 auf, die die Kapazitätsänderungen des erwähnten mindestens einen Meßkondensators in eine druckabhängige elektrische Spannung und/oder in einen druckabhängigen elektrischen Strom umwandelt und diese/n über elektrische Anschlußleitungen 14 einer weiteren Verarbeitung und/oder Anzeige zugänglich macht. Die Schaltung 13 kann auch außerhalb des Gehäuses 2 angeordnet und über Anschlußleitungen mit dem Sensorelement 1 verbunden sein.

Das Sensorelement 1 ist in einem Innenraum 21 eines im Ausführungsbeispiel der Fig. 1 rotationssymmetrischen, topfartiges Gehäuse 2 angeordnet. Dieses besteht beispielsweise aus Edelstahl und weist an seinem offenen Ende eine sich radial nach außen erstreckende Schulter auf, die einen Flansch 22 bildet.

Ein elastisches Verbindungselement 3 ist fest mit einer kreisringförmigen, äußeren Oberfläche 23 des Flansches 22 verbunden. Das elastische Verbindungselement 3 ist im Ausführungsbeispiel der Fig. 1 eine Wellmembran 31, die kreisringscheiben-förmig ist. Sie besteht aus einem meßmedium-beständigen Metall, das einen mit dem Temperaturkoeffizienten des Materials des Sensorelementes 1 vergleichbaren Temperaturkoeffizienten aufweist. Je nach Meßmedium ist das Material des Verbindungselements 3 ein Edelstahl oder ein anderes qualitativ hochwertiges Metall, wie z.B. Nickel, Nickeleisen, Niob oder Tantal.

Vorzugsweise wird eine dicke und somit sehr robuste Wellmembran eingesetzt. Dies beeinträchtigt die Meßgenauigkeit in keiner Weise, da der zu messende Druck nicht über die Wellmembran 31 auf das Sensorelement 1 übertragen wird - im Gegensatz zu der oben erwähnten Druckübertragung über die dünne Metallfolie nach der GB-A 20 12 052.

Die das Verbindungselement 3 darstellende Wellmembran 31 ist mit dem Flansch 22 des Gehäuses 2 hermetisch dicht verbunden, z.B. verschweißt. Diese Verbindung 24 ist in Fig. 1 lediglich schematisch dargestellt.

Das Sensorelement 1 ist im Gehäuse 2 derart angeordnet, daß die Außenseite der Sensormembran 11 und die kreisringförmige äußere Oberfläche 23 des Flansches 22 in einer Ebene liegen. Die Symmetrieachsen von Gehäuse 2 und Sensorelement 1 sind identisch, so daß dieses im Gehäuse zentriert ist.

Eine innere Kreisringfläche des Verbindungselements 3 ist mit einer äußeren kreisringförmigen Randfläche der Außenseite der Sensormembran 11, z.B. durch eine hermetisch dichte, d.h. gasdichte und diffusionsdichte, Fügung, verbunden. Beispiele für eine solche hermetisch dichte Fügung zwischen einer Sensormembran, insb. aus Keramik, und einem Verbindungselement 3, insb. aus Metall, sind eine Diffusionsschweißung oder eine Aktiv-Hartlötung.

Aktiv-Hartlot besteht aus einer Legierung, die wenigstens ein reaktives Element, z.B. Titan oder Zirkonium, enthält. Das reaktive Element reduziert und benetzt daher die Oberfläche der zu verlötenden Teile während des Hartlötens. Bei Oxidkeramik bewirkt die hohe Affinität des reaktiven Elements zum Sauerstoff eine Reaktion mit der Keramik, was zur Bildung von Mischoxiden und freien chemischen Valenzen führt. Ein bei Aluminiumoxid-Keramik bevorzugtes Zirkonium/ Nickel/Titan-Hartlot ist in der US-A 53 34 344 beschrieben.

Das Sensorelement 1 und das Verbindungselement 3 schließen das Gehäuse 2 frontbündig ab. Dies ist insb. in der Lebensmittelindustrie besonders erwünscht, da frontbündige Drucksensoren sehr gut zu reinigen sind. Die konkrete Ausbildung des Verbindungselements 3 ist im Rahmen dessen an sich beliebig, daß gewährleistet sein muß, daß eine Dehnung des Verbindungselements sowohl parallel als auch senkrecht zur Symmetrieachse von Gehäuse 2 und Sensorelement 1 möglich ist.

Die Korrosionsbeständigkeit der Sensormembran 11 kann vollständig ausgenutzt werden, sofern die Verbindung zwischen dem Verbindungselement 3 und der Sensormembran 11 gleichermaßen korrosionsbeständig ausgebildet ist. Gleiches gilt für die Verbindung 24 zwischen dem Verbindungselement 3 und dem Flansch 22 des Gehäuses 2, sofern diese Verbindung überhaupt dem Meßmedium ausgesetzt ist. Ist die Verbindung 24, z.B. durch die Befestigung des Drucksensors an einem Behälter, gegenüber dem Meßmedium abgedeckt, braucht sie nicht korrosionsbeständig zu sein.

Der vom Sensorelement 1 nicht eingenommene Teil des abgeschlossenen Innenraums 21 des Gehäuses 2 ist mit einer Flüssigkeit 4 gefüllt. Es ist vorteilhafterweise eine Flüssigkeit 4 zu verwenden, die insb. inkompressibel und insb. scherkraftsfrei ist, in der also keine Scherkräfte auftreten. In der Flüssigkeit 4 liegt dann auch bei schnellen Änderungen des auf den Drucksensor einwirkenden Drucks immer eine isotrope Druckverteilung vor, so daß keine resultierenden richtungsabhängigen Kräfte auf das Sensorelement 1 einwirken. Da die Anschlußleitungen 14 durch den Innenraum verlaufen, ist eine nicht-leitende Flüssigkeit 4 einzusetzen.

Diese eben genannten Anforderungen an die Flüssigkeit 4 werden z.B. von einem Öl, insb. von einem Silikonöl, oder von einem Gel, insb. von einem Silikongel, erfüllt. Für Anwendungen, bei denen sichergestellt werden soll, daß bei einer Zerstörung des Drucksensors keine Flüssigkeit ausläuft, ist bevorzugt ein Gel einzusetzen. Anderenfalls ist bevorzugt ein Öl einzusetzen.

Die Flüssigkeit 4 läuft dann bei einer Zerstörung des Drucksensors aus, und das Meßmedium dringt in den Drucksensor ein. Eine dadurch bedingte Änderung der elektrischen Leitfähigkeit kann z.B. zur Auslösung eines Alarms genutzt werden.

Der Grundkörper 12 und eine zylindrische Mantelfläche des Sensorelements 1 sind von der Flüssigkeit 4 umgeben. Ein auf die Sensormembran 11 und das Verbindungselement 3 einwirkender Druck bedingt einen isostatischen Druck in der Flüssigkeit 4, der dem einwirkenden Druck entgegenwirkt. Dadurch ist das Sensorelement 1 in seiner Lage fixiert, ohne daß die mechanischen Verbindungen einerseits zwischen dem Verbindungselement 3 und dem Flansch 22 des Gehäuses 2 und andererseits zwischen dem Verbindungselement 3 und der Sensormembran 11 einer Druckbelastung unterworfen sind.

Zugleich erfüllt die Flüssigkeit 4 die Aufgabe eines Überlastschutzes. Der auf den Drucksensor einwirkende Druck wird durch die Flüssigkeit 4 auf das Gehäuse 2 übertragen.

Auf das Sensorelement 1 wirkt dagegen allseitig derselbe Druck ein. Eine beispielsweise punktuelle oder linienförmige Belastung des Sensorelements 1, die dessen Zerstörung bewirken könnte, tritt gar nicht erst auf.

Es liegt eine hohe Berstsicherheit vor, da das Gehäuse 2 sehr stabil ist und das Meßmedium bei einer Zerstörung des Sensorelements 1 oder des Verbindungselements 3 nicht durch das Gehäuse 2 hindurch in einen Raum eindringt, der, vom Meßmedium aus gesehen, hinter dem Drucksensor liegt. Ein solcher Raum ist z.B. der Innenraum eines Elektronik-Gehäuses, in das der Drucksensor eingebaut ist. Der Drucksensor kann daher zur Messung von sehr hohen Drücken, z.B. bis zu 10⁸ Pa (= 1000 bar), eingesetzt werden.

Anstatt eines Sensorelements 1 mit einem im Vergleich zur Sensormembran 11 sehr robusten, steifen Grundkörper 12 kann auch ein Sensorelement 1 mit einem Grundkörper 12 eingesetzt werden, der vergleichbare mechanische Eigenschaften wie die Sensormembran 11, insb. die gleiche Dicke oder die gleiche Steifigkeit, aufweist. Sensormembran 11 und Grundkörper 12 erfahren in diesem Fall durch einen auf den Drucksensor einwirkenden Druck die gleiche Durchbiegung. Die Empfindlichkeit eines solchen Drucksensors ist doppelt so groß wie bei einem Drucksensor mit einem robusten, steifen Grundkörper 12, ohne daß die mechanische Stabilität des Drucksensors herabgesetzt ist. Bei mechanisch eingespannten Sensorelementen ist dies nicht möglich, da die Einspannung und damit auch der Grundkörper dem gesamten einwirkenden Druck ausgesetzt sind.

Eine thermische Ausdehnung der Flüssigkeit 4 hat keinen Einfluß auf die Meßgenauigkeit des Drucksensors. Da die Flüssigkeit bevorzugt isotrop sein und darin keine Scherkräfte auftreten sollen, bewirkt die thermische Ausdehnung lediglich eine Verschiebung des Sensorelements 1 und eine Verschiebung und/oder Verformung des elastischen Verbindungselements 3. Die Druck-Meßwerte weisen daher auch eine geringe Temperaturabhängigkeit auf, da die zwischen dem Verbindungselement und dem Sensorelement und zwischen dem Verbindungselement und dem Gehäuse bestehenden Verbindungen durch die auf den Drucksensor einwirkende Temperatur nicht belastet sind.

Weiterhin weisen die Meßwerte des Drucksensors keine druckabhängige, durch die Befestigung des Sensorelements 1 im Gehäuse 2 hervorgerufene Hysterese auf. Da die Flüssigkeit 4 bevorzugt inkompressibel und scherkraftfrei sein soll, herrscht bei einem bestimmten Druckwert immer derselbe isotrope Druck in der Flüssigkeit, und zwar unabhängig von den Druckwerten, die zuvor geherrscht haben.

Das Gehäuse 2 weist eine Bodenwand 25 auf, in der eine Leitungsdurchführung 5, z.B. eine Glasdurchführung, angeordnet ist, durch die die Anschlußleitungen 14 des Sensorelements 1 aus dem Gehäuse herausgeführt sind.

An der Bodenwand 25 kann, wie oben bereits kurz erwähnt wurde, ein weiteres nicht dargestelltes Elektronik-Gehäuse zur Aufnahme von weiteren elektronischen Schaltungen, von Auswerteeinheiten und/oder von Displays angeordnet sein.

Die Befestigung des Gehäuses 2 am Meßort ist in den Figuren nicht dargestellt. Diese Befestigung erfolgt, indem, wie dargestellt, das Gehäuse 2 mit dem Flansch 22 versehen ist, der am Meßort mit einem Gegenflansch zu verschrauben ist, oder z.B. indem das Gehäuse 2 ein Schraubengewinde aufweist, das in ein entsprechendes Mutterngewinde einzuschrauben ist, oder z.B. indem das Gehäuse 2 so ausgebildet ist, daß es am Meßort, etwa in eine Behälteröffnung, eingeschweißt werden kann. Weitere, dem Fachmann bekannte, lösbare oder nicht-lösbare Gehäusebefestigungen sind möglich.

In Fig. 2 ist ein Längsschnitt einer weiteren Ausführungsform eines Drucksensors schematisch dargestellt. Dieser weist im Unterschied zu dem in Fig. 1 dargestellten Drucksensor zur Fixierung des Sensorelements 1 ein zusätzliches Element 6 auf. Dieses besteht aus einer Scheibe 61, die die Bodenwand 25 des Gehäuses 2 nach Fig. 1 ersetzt und mit dem Gehäuse 2 z.B. verschraubt oder verschweißt ist.

An der innenraum-zugewandten Seite der Scheibe 61 ist ein Hohlzylinder 62 angeformt. Das Sensorelement 1 liegt mit einem äußeren Rand der sensormembran-abgewandten Kreisfläche des Grundkörpers 12 auf einer scheibenabgewandten Kreisringfläche des Hohlzylinders 62 auf. Das Element 6 fixiert das Sensorelement 1 zusätzlich zu der Fixierung, die durch das Verbindungselement 3 besteht, gegen eine Verkippung gegenüber dem Gehäuse 2.

Der Hohlzylinder 62 weist Bohrungen 621 auf, durch die hindurch die beiden durch das Element 6 voneinander getrennten Teilräume des Innenraums 21 miteinander in Verbindung stehen, so daß die Flüssigkeit 4 in diese Teilräume gelangen kann.

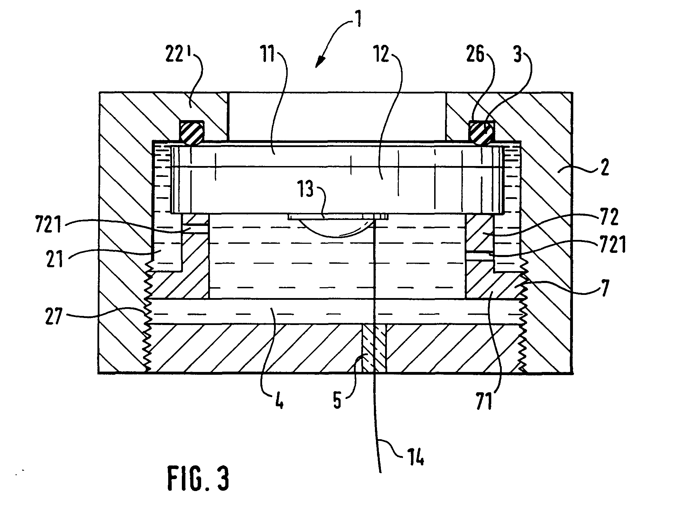

In Fig. 3 ist ein Längsschnitt einer weiteren Ausführungsform eines Drucksensors dargestellt, bei dem das elastische Verbindungselement 3 eine Dichtung, bevorzugt ein O-Ring oder eine Formdichtung aus einem Elastomer, ist. Das Gehäuse 2 weist eine endseitig angeformte, sich radial in das Innere des Gehäuses 2 erstreckende Schulter 22' auf. Auf einer innenraum-zugewandten Seite der Schulter 22' befindet sich eine Nut 26, zur Aufnahme des elastischen Verbindungselements 3.

Das Sensorelement 1 ist durch eine Sensorauflage 7 im Gehäuse 2 so gehaltert, daß es mit einer äußeren Ringfläche der Sensormembran 11 am Verbindungselement 3 dicht anliegt. Die Sensorauflage 7 ist im Ausführungsbeispiel von Fig. 3 ein Gewindering 71, an den ein koaxial zum Gehäuse 2 verlaufender Hohlzylinder 72 angeformt ist.

Der Gewindering 71 ist in ein im Gehäuse 2 angebrachtes Mutterngewinde 27 eingeschraubt. Das Sensorelement 1 liegt mit einem äußeren Rand der sensormembran-abgewandten Kreisfläche des Grundkörpers 12 auf einer gewinderingabgewandten Kreisringfläche des Hohlzylinders 72 auf. Durch die Sensorauflage 7 ist das Sensorelement 1 zwischen dem elastischen Element 3 und dem Hohlzylinder 72 fixiert.

Der Hohlzylinder 72 weist Bohrungen 721 auf, durch die hindurch die beiden durch die Sensorauflage 7 voneinander getrennten Teilräume des Innenraums 21 des Gehäuses 2 miteinander in Verbindung stehen, so daß auch hier die Flüssigkeit 4 in diese Teilräume gelangen kann.

Der Innenraum 21 ist durch die Schulter 22', das elastische Verbindungselement 3 und das Sensorelement 1 abgeschlossen. Ein auf den Drucksensor einwirkender Druck bewirkt einen isostatischen Druck in der Flüssigkeit 4. Sowohl auf das Sensorelement 1 als auch die Sensorauflage 7 wirkt daher allseitig der gleiche Druck. Durch einen auf den Drucksensor einwirkenden Druck wird die Sensorauflage 7 folglich nicht belastet.

Analog zu den in den Fig. 1 und 2 dargestellten Drucksensoren ist auch der Drucksensor nach Fig. 3 sehr robust, und seine Meßwerte weisen eine geringe Hysterese und eine geringe Temperaturabhängigkeit auf.

Es ist selbstverständlich auch möglich, anstatt einer Druckmeßzelle eine Druckdifferenz-Meßzelle zu verwenden. Eine solche Druckdifferenz-Meßzelle ist z.B. eine Druckmeßzelle der oben beschriebenen Art, die, außer daß deren Membran mit dem Meßmedium beaufschlagt ist, noch eine Druckzuleitung aufweist, die einen an deren einem Ende zugeführten weiteren Druck durch den Grundkörper hindurch in die Kammer der Meßzelle leitet.

## Patentansprüche

1. Drucksensor zur Messung des Druckes eines Meßmediums
- mit einem Sensorelement (1) in Form einer kapazitiven Druckmeßzelle aus einer Keramik, insb. aus Aluminiumoxid-Keramik,
-- wobei die Druckmeßzelle eine Sensormembran (11) und einen Grundkörper (12) aufweist,
- mit einem einen Innenraum (21) aufweisenden, insb. topf artigen, Gehäuse (2) zur Aufnahme des Sensorelements (1),
- mit einem das Gehäuse (2) mit einem Rand der Sensormembran (11) verbindenden ringscheiben-förmigen, elastischen Verbindungselement (3),
-- wobei dieses und das Sensorelement (1) den Innenraum (21) zum Meßmedium hin abschließen, und
- mit einer den abgeschlossenen Innenraum (21) vollständig ausfüllenden Flüssigkeit (4).

2. Drucksensor nach Anspruch 1, bei dem das elastische Verbindungselement (3) aus einem Metall besteht und hermetisch dicht, insb. durch Diffusionsschweißung oder Aktiv-Hartlötung, mit dem Sensorelement (1) und hermetisch dicht mit dem Gehäuse (2), insb. durch Schweißen, verbunden ist.

3. Drucksensor nach Anspruch 1 oder 2, bei dem das Verbindungselement (3) eine Wellmembran ist.

4. Drucksensor nach Anspruch 1, bei dem das elastische Verbindungselement (3) eine Dichtung, insb. ein O-Ring, ist.

5. Drucksensor nach Anspruch 1, bei dem das elastische Verbindungselement (3) und das Sensorelement (1) das Gehäuse (2) frontbündig abschließen.

6. Drucksensor nach Anspruch 1, bei dem die Flüssigkeit (4) inkompressibel und scherkraftfrei ist.

7. Drucksensor nach Anspruch 1, bei dem die Flüssigkeit (4) ein Öl, insb. ein Silikonöl, oder ein Gel, insb. ein Silikongel, ist.

## Claims

1. A pressure sensor for measuring the pressure of a medium to be measured, comprising:
- a sensing element (1) in the form of a pressure-measuring cell of ceramic, particularly of alumina ceramic,
-- the pressure-measuring cell comprising a sensor diaphragm (11) and a substrate (12);
- a casing (2), particularly a pot-type casing, for receiving the sensing element (1) and having an interior space (21);
- an annular, particularly annular-disk-shaped, flexible connecting element (3) connecting the casing (2) with an edge of the sensing diaphragm (11);
-- the connecting element and the sensing element (1) closing the interior space (21) toward the medium to be measured; and
- a liquid (4) filling the enclosed interior space (21).

2. The pressure sensor as claimed in claim 1 wherein the flexible connecting element (3) is made of a metal and is secured and hermetically sealed to the sensing element (1), particularly by diffusion welding or active brazing, and to the casing (2), particularly by welding.

3. The pressure sensor as claimed in claim 1 or 2 wherein the connecting element (3) is a corrugated diaphragm.

4. The pressure sensor as claimed in claim 1 wherein the flexible connecting element (3) is a seal, particularly an O-ring.

5. The pressure sensor as claimed in claim 1 wherein the flexible connecting element (3) and the sensing element (1) close the casing (2) flush with the front surface of the latter.

6. The pressure sensor as claimed in claim 1 wherein the liquid (4) is incompressible and free from shear forces.

7. The pressure sensor as claimed in claim 1 wherein the liquid (4) is an oil, particularly a silicone oil, or a gel, particularly a silicone gel.

## Revendications

1. Capteur de pression pour la mesure de pression dans un milieu de mesure comprenant :
- un élément capteur (1) formé d'une cellule de mesure de la pression capacitive faite d'une céramique, en particulier d'une céramique d'oxyde d'aluminium,
-- la cellule de mesure de la pression présentant une membrane de capteur (11) et un corps de base (12),
- un boîtier (2), en particulier en forme de godet et présentant un espace intérieur (21), destiné à recevoir l'élément capteur (1),
- un élément de liaison élastique (3), en forme de disque annulaire, qui relie le boîtier (2) à un bord de la membrane de capteur (11),
-- cet élément de liaison et l'élément de capteur (1) fermant l'espace intérieur (21) en l'isolant du milieu de mesure , et
- un liquide (4) qui remplit entièrement l'espace intérieur fermé (21).

2. Capteur de pression selon la revendication 1, dans lequel l'élément de liaison élastique (3) est fait d'un métal, est relié à l'élément capteur (1) à joint hermétiquement étanche, en particulier par soudage par diffusion ou par brasure dure active et est relié au boîtier (2) à joint hermétiquement étanche, en particulier par soudage.

3. Capteur de pression selon la revendication 1 ou 2, dans lequel l'élément de liaison (3) est une membrane ondulée.

4. Capteur de pression selon la revendication 1, dans lequel l'élément de liaison élastique (3) est une garniture d'étanchéité, en particulier une bague torique.

5. Capteur de pression selon la revendication 1, dans lequel l'élément de liaison élastique (3) et l'élément capteur (1) ferment le boîtier (2) la surface frontale étant à l'affleurement.

6. Capteur de pression selon la revendication 1, dans lequel le liquide (4) est incompressible et dépourvu de forces de cisaillement.

7. Capteur de pression selon la revendication 1, dans lequel le liquide (4) est une huile, en particulier une huile de silicone, ou un gel, en particulier un gel de silicone.
